# EUROPÄISCHE PATENTSCHRIFT

(11) **EP 0 438 380 B1**
(45) Veröffentlichungstag und Bekanntmachung des Hinweises auf die Patenterteilung: **22.05.1996**
(21) Anmeldenummer: 91810013.2
(22) Anmeldetag: 10.01.1991
(51) Int. Cl.: C08F 26/04, D06P 1/66, D06P 1/52

(54) **Polymerisierte quaternäre Diallylammoniumverbindungen**
Polymerized quaternary diallylammonium compounds
Composés de diallylammonium quaternaire polymérisé

(30) Priorität: 19.01.1990 CH 174/90; 15.03.1990 CH 849/90
(43) Veröffentlichungstag der Anmeldung: 24.07.1991
(73) Patentinhaber: CIBA-GEIGY AG, CH-4002 Basel (CH)
(72) Erfinder: Töpfl, Rosemarie, CH-4143 Dornach (CH)

(56) Entgegenhaltungen:
- DE-A- 2 146 511
- DE-A- 3 626 410
- DE-A- 3 720 508
- PATENT ABSTRACTS OF JAPAN, Band 010, Nr. 321 (C-382)[2377], 31. Oktober 1986; & JP-A-61 133 213

## Beschreibung

Die vorliegende Erfindung betrifft ein Verfahren zur Nachbehandlung vom gefärbtem cellulosehaltigem Fasermaterial unter Verwendung von polymerisierten quaternären Diallylammoniumverbindungen.

Färbungen und Drucke mit substantiven Farbstoffen zeigen ungenügende Nassechtheiten, besonders Wasch- und Wasserechtheiten. Der Farbstoff, welcher an der Oberfläche der Cellulose nicht kovalent gebunden ist, kann durch Waschoperationen wieder entfernt werden und der ausgeblutete Farbstoff kann auf ungefärbtes Textilmaterial, welches im gleichen Waschgang gewaschen wird, wieder aufziehen.

Es wurden viele Versuche durchgeführt, um diesen Mangel zu beheben. So kann man zum Beispiel bei einer Nachbehandlung mit einem konventionellen kationischen Nachbehandlungsmittel z.B. vom Typ Tinofix EWA die Wasserechtheit verbessern und auch bei der Waschechtheit tritt eine leichte Verbesserung ein. Letztere ist jedoch nicht permanent. Bei mehrmaligen Waschoperationen insbesondere unter alkalischen Bedingungen und erhöhten Temperaturen, z.B. über 50°C wird das konventionelle kationische Nachbehandlungsmittel wieder vom Textilmaterial entfernt und dies bedeutet, dass die Färbung ihre verbesserte Waschechtheit wieder verliert.

Mit der Verwendung von Reaktivfarbstoffen hoffte man das Problem der Nassechtheiten gelöst zu haben, weil diese Farbstoffe mit der Cellulose eine chemische Bindung eingehen. Es zeigte sich jedoch, dass diese Faser/Farbstoffbindung gegen Hydrolyse nicht optimal beständig ist. Dies wiederum hat zur Folge, dass eine solche hydrolysierte Färbung gegenüber einem Waschvorgang nicht beständig ist. Der nicht mehr chemisch fixierte Farbstoffanteil wird im Waschbad gelöst und kann somit z.B. ein im gleichen Waschgang mitgewaschenes ungefärbtes Textilgut anschmutzen. Ein weiterer Nachteil ist das ungenügende Verhalten der Faser/Farbstoffbindung gegen erhöhte Temperaturen in trockner Luft, Bedingungen, wie sie bei Thermofixieren auftreten von z.B. Baumwolle/ Polyester-Mischgeweben. Diese Faser/Farbstoffbindung wird bei Temperaturen von mehr als 180°C zum Teil wieder zerstört, was ebenfalls bei einem Waschprozess zu Farbstoffverlust führen kann. Ein grosser Nachteil beim Färben von Reaktivfarbstoffen ist zudem die ungenügende Auswaschbarkeit des nicht fixierten Farbstoffes. Man benötigt mehrere sehr aufwendige Wasch- und Spülvorgänge um den nichtfixierten Farbstoff von der Faser zu entfernen.

Es wurde nun ein Produkt entwickelt, welches besonders die Nassechtheiten von Cellulosefärbungen, die mit substantiven Farbstoffen erzeugt worden sind, bedeutend verbessert. Beispielsweise können Waschechtheiten unter alkalischen Bedingungen bei Temperaturen von über 50°C und besonders bei heute üblichen 60°C-Wäschen mit natriumperborathaltigen Waschmitteln (ISO 105/C06 C2S) verbessert werden. Ebenso kann der negative Einfluss der Hydrolyse und des Thermocracking bei Reaktivfärbungen weitgehend unterdrückt werden. Insbesondere wird ein kationisches Nachbehandlungsmittel bereitgestellt, das unter Vermeiden von störender Nebenproduktenbildung, wie die Dichlorpropanolbildung, hergestellt werden konnte.

Gegenstand der vorliegenden Erfindung ist daher ein Verfahren zur Nachbehandlung von gefärbtem cellulosehaltigem Textilfasermaterial, welches dadurch gekennzeichnet ist, dass man dieses Material nach der Färbung mit einer wässerigen Flotte behandelt, welche das Polymerisat einer quaternären Ammoniumverbindung der Formel 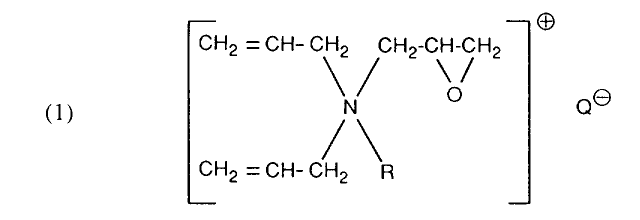 worin R C₁-C₃-Alkyl und Q^{^{⊖}} ein C₁-C₃-Alkylsulfation oder das Anion einer aromatischen Sulfonsäure bedeuten, enthält, wobei das Polymerisat durch Umsetzung von 1-Diallylamino-2,3-epoxypropan mit einem Sulfonsäurealkylester der Formel

(2) Z-SO₂-OR,

worin Z einen Arlyrest oder -OR bedeutet und R die angegebene Bedeutung hat, und Polymerisation der erhaltenen quaternären Ammoniumverbindung der Formel (1) hergestellt wird.

Geeignete Alkylgruppen für R sind Methyl, Ethyl, Propyl oder Isopropyl. Bevorzugt sind Ethyl und besonders Methyl.

Als Arylsulfonation stellt Q^{^{⊖}} z.B. das Benzolsulfonat-, p-Toluolsulfonat- oder Chlorbenzolsulfonation dar. Bevorzugt ist Q^{⊖} das Ethylsulfation (CH₃-CH₂SO₄)-ion oder vor allem das Methylsulfation (CH₃SO₄).

Die Umsetzung (Quaternisierung) erfolgt zweckmässigerweise bei 30-90°C, vorzugsweise bei 30-60°C.

Die Quaternisierung kann in einem nichtpolaren oder polaren Lösungsmittel, wie z.B. Wasser, Dimethylformamid oder Ethanol durchgeführt werden.

Die Isolierung des quaternisierten Produktes erfolgt auf übliche Weise.

Gut geeignet für die Quaternisierung unter den Sulfonsäureestern sind z.B. Benzolsulfonate, p-Toluolsulfonate, p-Brombenzolsulfonate, p-Chlorbenzolsulfonate, p-Nitrobenzolsulfonate und insbesondere Dialkylsulfate wie Diethylsulfat und vor allem Dimethylsulfat.

Die Herstellung von 1-Diallylamino-2,3-epoxypropan erfolgt in an sich bekannter Weise durch Umsetzung von Diallylamin mit einem α-Epihalogenhydrin, worauf in einem alkalischen pH-Bereich z.B. durch Zugabe eines Alkalimetallhydroxides wie Natrium- oder Kaliumhydroxid das 1-Diallylamino-2,3-epoxypropan entsteht.

Das Epihalogenhydrin, das mit Diallylamin umgesetzt wird, kann jedes beliebige α-Epihalogenhydrin, wie z.B. Epibromhydrin, Epifluorhydrin, Epijodhydrin, β-Methylepichlorhydrin oder vorzugsweise Epichlorhydrin sein.

Die Herstellung von 1-Diallylamino-2,3-epoxypropan wird z.B. in der US-A-3 316 225 beschrieben.

Spezifische monomere Ammoniumsalze der Formel (1), die homopolymerisiert werden können, sind
N-Epoxy-2,3-propyl-N-methyl-N,N-diallylammoniummethylsulfat,
N-Epoxy-2,3-propyl-N-ethyl-N,N-diallylammoniumethylsulfat und
N-Epoxy-2,3-propyl-N-methyl-N,N-diallylammonium-p-toluolsulfonat.

Der erstgenannte Vertreter ist besonders bevorzugt.

Die Polymerisation der quaternären Ammoniumverbindung der Formel (1) erfolgt vorzugsweise in Gegenwart eines Freiradikalkatalysators.

Geeignete freie Radikale bildende Katalysatoren sind symmetrische Peroxidicarbonate, Peroxidicarbamate, Perbenzoate, Perborate, Persulfate oder Peroxidsulfate. Bevorzugter Katalysator ist Kaliumpersulfat sowie auch Azo-bis-(2-amidinopropan)-hydrochlorid oder Azobis-isobutyronitril.

Diese Katalysatoren können in Mengen von 0,05 bis 5 Gew.%, vorteilhafterweise 0,5 bis 2,5 Gew.%, vorzugsweise 0,5 bis 2 Gew.%, bezogen auf die verwendete Diallylammoniumverbindung, eingesetzt werden.

Die Polymerisation wird vorteilhafterweise in inerter Atmosphäre z.B. in einer Stickstoffatmosphäre durchgeführt.

Die Polymerisationsbedingungen sind so zu wählen, dass weder infolge zu hoher pH-Werte des Reaktionsmediums noch infolge zu hoher Temperatur ein vorzeitiger Austausch beweglicher Substituenten eintritt. Man arbeitet daher bevorzugt in wässerigem Medium unter möglichst schonender Temperatur und pH-Verhältnissen, zweckmässig bei einer Temperatur von 30 bis 85°C und einem pH-Wert von 5 bis 7, vorzugsweise 6 bis 7, wobei zur Erzielung des erwünschten pH-Wertes Schwefelsäure hinzugefügt werden kann.

Die Polymerisate fallen als Lösungen oder viskose Massen an. Durch Verdünnen mit Wasser kann man für die Praxis verwendbare Produkte mit einem Trockengehalt von z.B. 2 bis 60 Gew.-%, vorzugsweise 10 bis 55 Gew.-% und insbesondere 30 bis 55 Gew.-% herstellen.

Zur Verbesserung der Lagerstabilität ist es bevorzugt, dass man der Polymerlösung eine geeignete Säure, wie Phosphorsäure oder insbesondere Schwefelsäure oder vor allem Salzsäure bis zu einem pH-Wert von 5 oder weniger, insbesondere zu einem pH-Wert von 2 bis 4,5 zugibt.

Die erfindungsgemässe Nachbehandlung des gefärbten cellulosehaltigen Fasermaterials wird in der Regel anschliessend an eine Färbung jedoch vorzugsweise aus frischem Bad durchgeführt

Als Fasermaterial kann regenerierte oder insbesondere natürliche Cellulose in Betracht kommen, wie z.B. Zellwolle, Viskoseseide, Hanf, Leinen, Jute oder vorzugsweise Baumwolle, sowie auch Fasermischungen mit synthetischen Fasern z.B. solche aus Polyamid/Baumwolle oder insbesondere aus Polyester/Baumwolle, wobei der Polyesteranteil mit Dispersionsfarbstoffen vorgefärbt sein kann.

Das Textilgut ist in jeglicher Form anwendbar, wie z.B. Flocke, Garne, Kreuzspulen, Garnstränge, Gewebe, Gewirke oder Filze, die ganz oder teilweise aus nativer oder regenerierter Cellulose bestehen.

Die Färbungen des Cellulosefasermaterials erfolgen in der Regel mit Reaktivfarbstoffen oder vorzugsweise mit Substantivfarbstoffen. Sie können nach dem Ausziehverfahren oder durch zweistufige Prozesse, wie z.B. das Foulardierverfahren oder Bedrucken erzeugt werden, wobei als Foulardierverfahren, besonders das sogenannte Pad-Steam-Verfahren, Thermofix-Verfahren oder das Klotz-Kaltverweilverfahren in Frage kommen.

Die Menge der verwendeten Farbstoffe richtet sich nach der gewünschten Farbtiefe. Im allgemeinen haben sich Mengen von 0,1 bis 10 Gew.%, insbesondere 0,5 bis 5 Gew.%, bezogen auf das eingesetzte Material, bewährt.

Als Substantivfarbstoffe sind die üblichen Direktfarbstoffe geeignet, beispielsweise die in Colour Index, 3. Auflage (1971) Band 2 auf den Seiten 2005-2478 genannten "Direct Dyes".

Unter Reaktivfarbstoffen werden die üblichen Farbstoffe verstanden, welche mit der Cellulose eine chemische Bindung eingehen, z.B. die in Colour Index, in Band 3 (3. Auflage, 1971) auf den Seiten 3391-3560 und in Band 6 (revidierte 3. Auflage, 1975) auf den Seiten 6268-6345 aufgeführten "Reactive Dyes".

Die Vorteile des erfindungsgemässen Verfahrens kommen besonders bei der Nachbehandlung von Färbungen mit Substantivfarbstoffen zum Tragen. Besonders geeignet sind Azofarbstoffe und Anthrachinonfarbstoffe und vor allem Polyazofarbstoffe mit 2 bis 6 Sulfonsäuregruppen.

Die erfindungsgemässe Nachbehandlung erfolgt vorzugsweise nach dem Ausziehverfahren.

Das Flottenverhältnis kann innerhalb eines weiten Bereiches gewählt werden z.B. 1:4 bis 1:100, vorzugsweise 1:5 bis 1:40.

Besondere Vorrichtungen sind nicht erforderlich. Es können beispielsweise die üblichen Färbeapparate, wie z.B. offene Bäder, Haspelkufen, Jigger, Paddel-, Düsen- oder Zirkulationsapparate verwendet werden.

Man arbeitet zweckmässig bei einer Temperatur von 20 bis 70°C, vorzugsweise 30 bis 50°C. Die Behandlungszeit kann 20 bis 60 Minuten betragen, doch genügt in den meisten Fällen eine Behandlungszeit von 20 bis 40 Minuten. Sie umfasst zweckmässigerweise 10 bis 20 Minuten behandeln mit dem kationischen Nachbehandlungsmittel, dann Zugabe des Alkali und weitere 10 bis 20 Minuten behandeln zur Fixierung des Nachbehandlungsmittels.

Unabhängig vom Flottenverhältnis wird zum Erreichen des erwünschten Echtheitsstandard das Nachbehandlungsmittel vorteilhafterweise in einer Menge von 0,5 bis 5 Gew.%, vorzugsweise 0,8 bis 2 Gew.% Wirkstoffgehalt, bezogen auf das Gewicht des Cellulosematerials, eingesetzt.

Ausser dem kationischen Nachbehandlungsmittel enthalten die erfindungsgemäss verwendeten Flotten noch alkalisch reagierende Verbindungen, wie z.B. Natriumhydroxid oder Kaliumhydroxyd. Vorzugsweise wird eine 30%-ige wässerige Natriumhydroxidlösung in einer Menge von 2 bis 10 ml/l, vorzugsweise 4 bis 6 ml/l Flotte eingesetzt. Das Alkali kann am Anfang mit dem kationischen Nachbehandlungsmittel oder vorzugsweise erst nach 15 bis 20 Minuten Behandeln mit dem Nachbehandlungsmittel der Flotte zugesetzt werden.

Der pH-Wert der Behandlungsflotten kann somit in der Regel 8 bis 13,5, vorzugsweise 10,5 bis 13 betragen.

Die Flotten können auch weitere übliche Zusätze, z.B. Elektrolyte, wie z.B. Natriumchlorid oder Natriumsulfat, Dispergier- und Netzmittel sowie auch Entschäumer und weitere kationische Fixiermittel enthalten, welche letztere auch faserreaktiv sein können.

Die Nachbehandlung des cellulosehaltigen Materials wird zweckmässig so durchgeführt, dass man das Material, anschliessend an eine Färbung, jedoch aus frischem Bad, mit einer wässerigen Flotte, die das Nachbehandlungsmittel, Alkali und gegebenenfalls ein Elektrolyt, vorzugsweise Natriumsulfat enthält, behandelt. Vorzugsweise geht man mit den gefärbten cellulosehaltigen Materialien in eine Flotte ein, die Nachbehandlungsmittel und Natriumsulfat enthält und eine Temperatur von 30°C aufweist und behandelt das gefärbte Material bei dieser Temperatur während 15 bis 20 Minuten, vorzugsweise 15 Minuten. Man fügt ein Alkali hinzu und behandelt das Material weitere 15 bis 20 Minuten bei 30°C.

Im Anschluss an die erfindungsgemässe Nachbehandlung wird gegebenenfalls das Cellulosematerial noch mit Wasser gespült, gegebenenfalls mit Essigsäure neutralisiert und danach auf übliche Weise getrocknet.

Man erhält nach dem erfindungsgemässen Verfahren Färbungen und Drucke auf Cellulosefasermaterial, welche mit Reaktiv- und besonders mit Substantivfarbstoffen erzeugt worden sind und eine erhebliche Verbesserung der Nassechtheiten, wie z.B. Wasch- und Wasserechtheiten zeigen. Färbeausbeute, Nuance und Lichtechtheit der Färbungen werden nicht negativ beeinflusst. Ausserdem zeigen die nachbehandelten Färbungen und Drucke keine Versteifung. Die erfindungsgemäss verwendeten Nachbehandlungsmittel zeichnen sich durch ausserordentliche Reinheit und helle Farbe aus. Das Verfahren ist besonders umweltfreundlich, da das Nachbehandlungsmittel kein störendes Nebenprodukt wie das Dichlorpropanol enthält.

In den folgenden Herstellungsvorschriften und Beispielen beziehen sich die Prozentangaben, wenn nichts anderes angegeben ist, auf das Gewicht. Die Mengen beziehen sich bei den Farbstoffen auf handelsübliche, d.h. coupierte Ware und bei den Hilfsmitteln auf Wirksubstanz.

### Herstellungsbeispiele

### Beispiel 1

a) Zu 78,9 g 1-Diallylamino-2,3-epoxypropan gibt man unter Rühren in 40 Minuten 63 g Dimethylsulfat, die Reaktionstemperatur wird durch Kühlung bei 60°C gehalten.
   Das Reaktionsprodukt der Formel 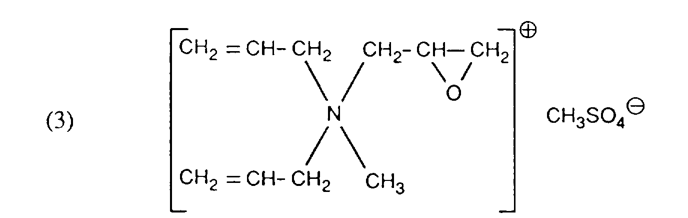 ist viskos, klar und löslich in Wasser. Epoxyzahl: 3,44 (Theorie: 3,54).
b) 141 g des gemäss a) hergestellten Produktes werden mit 60 g Wasser verdünnt und in Stickstoffatmosphäre auf 60°C erwärmt. Hierauf gibt man eine Lösung von 1 g 2,2'-Azo-bis-(2-amidinopropan)-hydrochlorid in 9 g Wasser zu. Nach 30 Minuten gibt man 0,5 g 2,2'-Azobis-(2-amidinopropan)-hydrochlorid in 4,5 g Wasser zu und wiederholt diese Zugabe nach 1 Stunde. Die Reaktionstemperatur steigt auf 83°C und wird während 1 1/2 Stunden bei 75°C gehalten. Alsdann fügt man 61 g Wasser hinzu. Man erhält eine klare, mittelviskose Polymerlösung, deren Feststoffgehalt 50 % beträgt. Die Viskosität des Polymerisationsproduktes, gemessen im Brookfield-Viskosimeter Typ LV, 25°C, vor der Zugabe von Wasser (Verdünnung) beträgt 780 m·Pas.

Das in a) verwendete 1-Diallylamino-2,3-epoxypropan wird gemäss US-A-3 316 225 folgendermassen hergestellt.

97 g Diallylamin werden zusammen mit 93,4 g α-Epichlorhydrin und 3 g Wasser auf 28°C erwärmt. Man rührt das Reaktionsgemisch während 7 Stunden bei 28-30°C. Hierauf gibt man bei 20°C eine Lösung von 47,25 g Natriumhydroxyd in 77 g Wasser zu. Bei 22-25°C rührt man weitere 2 Stunden. Anschliessend wird mit 170 g Wasser verdünnt, die organische Phase abgetrennt, über Kaliumcarbonat getrocknet und bei K_{p10⁻²} : 40-42°C destilliert. Das erhaltene 1-Diallylamino-2,3-epoxypropan weist eine Aminzahl von 6,34 (Theorie 6,53) und eine Epoxyzahl von 5,9 (Theorie 6,53) auf.

### Beispiel 2:

282 g des gemäss Beispiel 1a) hergestellten Produktes der Formel (3) werden in einem mit Stickstoff gespülten Reaktionsgefäss mit 121 g Wasser verdünnt und auf 60°C erwärmt. Hierauf gibt man 2,5 ml einer wässrigen Natriumhydrogensulfitlösung (38-40 %) und 20 ml einer 10 %igen wässrigen Kaliumpersulfat-Lösung. Die Reaktionstemperatur steigt auf 87°C. Nach 50 Minuten gibt man 10 ml 10 %ige Kaliumpersulfat-Lösung zu und wiederholt diese Zugabe nach 1 Stunde. Man rührt weitere 1½ Stunden bei 60°C und gibt dann zu dem Polymerisationsprodukt eine Lösung aus 131,4 g Wasser und 49 g Salzsäure (37 %) zu. Man rührt 1 Stunde bei 80°C, kühlt ab und gibt 10 % Natriumcarbonatlösung bis pH 3,5 zu. Man erhält eine dünnflüssige Polymerlösung, deren Wirkstoffgehalt 14,5 % beträgt. Die Viskosität der Polymerlösung beträgt 95 m·Pas

### Beispiel 3:

a) Zu 108,8 g 1-Diallylamino-2,3-epoxypropan gibt man unter Rühren in 70 Minuten bei 60-85°C 108,9 g Diethylsulfat und rührt 1 1/2 Stunden bei 75°C. Das Reaktionsprodukt der Formel 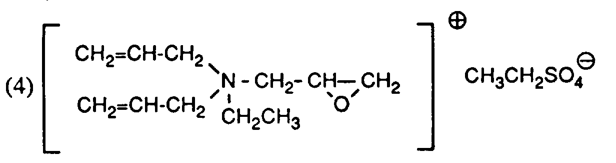 ist viskos, klar und löslich in Wasser. Epoxyzahl: 3,17 (Theorie: 3,23)
b) 140 g des gemäss a) hergestellten Produktes werden mit 60 g Wasser verdünnt und in Stickstoffatmosphäre auf 60°C erwärmt. Hierauf gibt man 1,2 ml einer wässrigen Natriumhydrogensulfitlösung (38-40 %) und 7,5 ml einer 6,7%igen wässrigen Kaliumpersulfatlösung. Die Reaktionstemperatur steigt auf 73°C. Innerhalb von 2 Stunden lässt man 33,5 ml 6,7%ige wässrige Kaliumpersulfat-Lösung zutropfen und rührt anschliessend weitere 2 Stunden bei 70°C. Danach gibt man eine Lösung aus 25 g Salzsäure (37 %) und 144 g Wasser zu. Man rührt 1 Stunde bei 80°C, kühlt ab und gibt 10%ige Natriumcarbonatlösung bis pH 6,0 zu. Man erhält eine dünnflüssige Polymerlösung, deren Wirkstoffgehalt 20,5 % beträgt. Die Viskosität der Polymerlösung (bei 25°C) beträgt 80 m·Pas.

### Beispiel 4:

a) Zu 206 g 1-Diallylamino-2,3-epoxypropan gibt man unter Rühren bei 50°C in 70 Minuten 249 g p-Toluolsulfonsäuremethylester. Man rührt bei 55°C 1 1/2 Stunden. Das Reaktionsprodukt der Formel 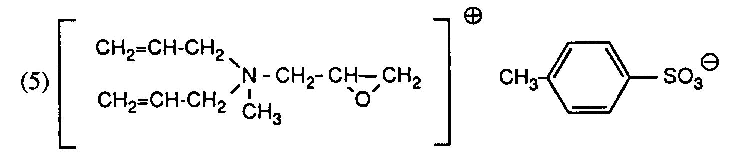 ist hochviskos, klar und löslich in Wasser. Epoxyzahl: 2,89 (Theorie: 2,94)
b) 141 g des gemäss a) hergestellten Produktes werden mit 60 g Wasser verdünnt und in Stickstoffatmosphäre auf 60°C erwärmt. Hierauf gibt man eine Lösung von 6 g 2,2**′**-Azobis-(2-amidinopropan)-hydrochlorid in 30 g Wasser zu. Die Reaktionstemperatur steigt auf 76°C und wird während 1 1/2 Stunden bei 75°C gehalten. Dann gibt man 75 g Wasser und 20 g Salzsäure (37 %) zu und rührt 2 1/2 Stunden bei 70°C nach. Man erhält eine dünnflüssige Polymerlösung, deren Wirkstoffgehalt 21 % beträgt. Die Viskosität der Polymerlösung (bei 25°C) beträgt 10 m·Pas.

### Anwendungsbeispiele

### Beispiel 1:

Jeweils 20 g Baumwoll-Tricot, gebleicht und mercerisiert, werden getrennt nach einem herkömmlichen Ausziehverfahren mit
1) 1,9 % eines Farbstoffes der Formel 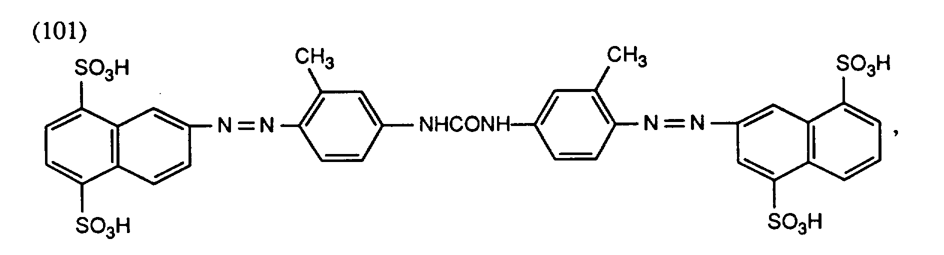
2) 1,5 % eines Farbstoffes der Formel 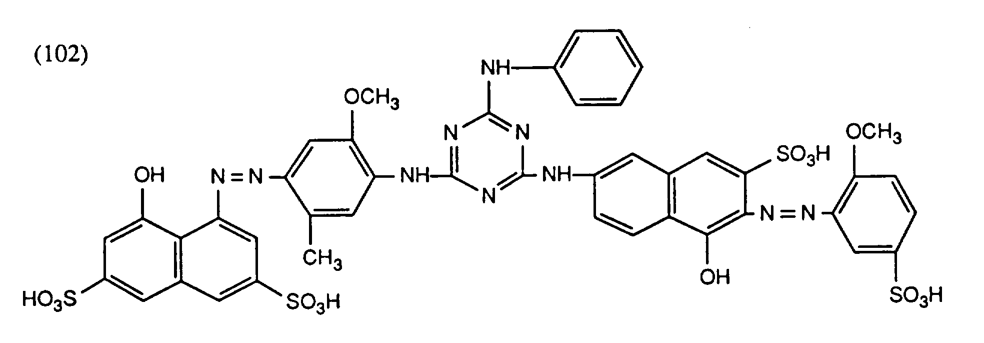 bzw.
3) 1,2 % eines Farbstoffes der Formel 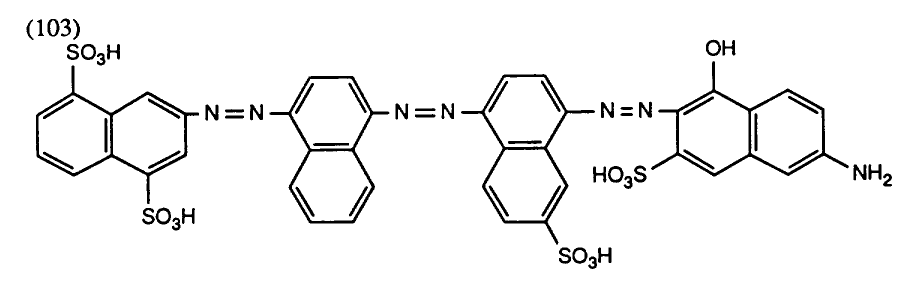 gefärbt und anschliessend 5 Minuten in kaltem Wasser gespült, worauf eine gelbe, rote bzw. blaue Färbung erhalten wird.

Diese drei Färbungen (je 20 g) werden während 15 Minuten bei 30°C und einem Flottenverhältnis von 1:20 mit einer wässerigen Flotte behandelt, die 1,6 % polyquaternären Polymerisates gemäss Herstellungsbeispiel 2 und 5 g/l Natriumsulfat calc.
enthält. Alsdann werden 5 ml/l einer 30%-igen Natriumhydroxidlösung hinzugefügt, worauf die Färbungen nochmals 15 Minuten bei 30°C behandelt werden. Man erhält waschechte Färbungen.

Verwendet man anstelle des Polymerisates gemäss Herstellungsbeispiel 2 jeweils 1,6 % der polyquaternären Polymerisate gemäss Herstellungsbeispiel 3 oder 4, so werden ebenfalls waschechte Färbungen erhalten.

### Beispiel 2:

(A) 20 g Baumwoll-Cretonne gebleicht, nicht mercerisiert werden gemäss einem Kaltverweilverfahren mit einer wässerigen Färbeflotte, die
   30 g/l eines Farbstoffes der Formel 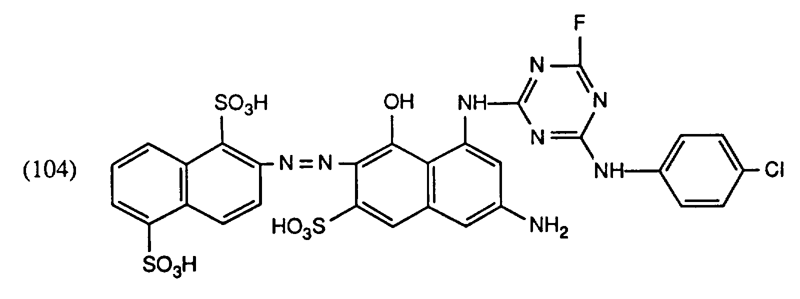
   10 g/l Natriumcarbonat calc.
   5 ml/l wässerige Natriumhydroxidlösung (30 %)
   enthält, foulardiert (Flottenaufnahme 80 %), 6 Stunden gelagert und durch mehrfaches Spülen und Waschen vom nichtfixierten Farbstoff befreit.
(B) 20 g dieser gefärbten Baumwolle werden bei 30°C während
   15 Minuten mit einer wässerigen Flotte behandelt, die
   1,5 % des Polymerisationsproduktes gemäss Herstellungsbeispiel 1 enthält. Alsdann fügt man 5 ml/l 30%-ige Natriumhydroxidlösung hinzu und behandelt das Material weitere 15 Minuten bei 30°C.

Man erhält eine rote Färbung, die eine ausgezeichnete saure Hydrolyseechtheit aufweist.

Verwendet man in (A) anstelle des Farbstoffes der Formel (104)
30 g/l eines Farbstoffes der Formel 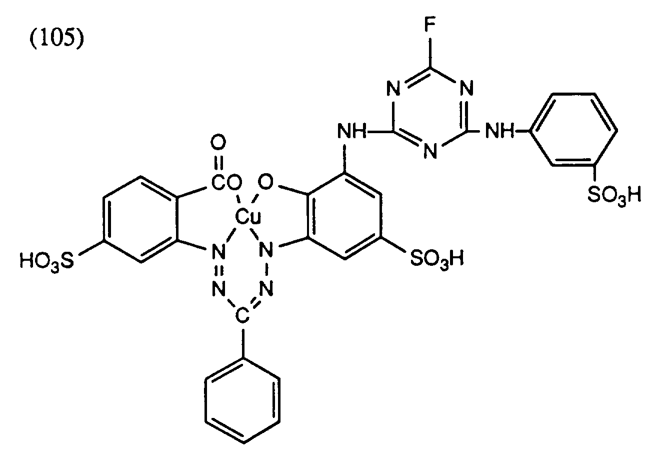 und behandelt die resultierende Färbung gemäss (B), so erhält man ebenfalls eine gegen saure Hydrolyse echte Reaktivfärbung. Die Ergebnisse der Prüfungen auf die saure Hydrolyse sind in Tabelle 1 aufgeführt.

**Tabelle 1:**

| Farbstoff | Nachbehandlung | Aendern der Nuance | Bluten auf | |
|---|---|---|---|---|
| | | | Baumwolle | Wolle |
| (104) | unbehandelt | 4 | 4 | 2 |
| (104) | Beispiel 2 | 5 | 5 | 5 |
| (105) | unbehandelt | 4-5 | 4-5 | 3 |
| (105) | Beispiel 2 | 5 | 5 | 5 |

### Beispiel 3:

Die Färbungen gemäss Beispiel 2 (A) mit ansschliessender Nachbehandlung (B) werden wiederholt, wobei nach dem Foulardieren die imprägnierte Ware auf einem Heissluftfixierer während 2 Minuten bei 210°C trockener Hitze ausgesetzt wird. Anschliessend an die Nachbehandlung wird die Prüfung auf Wasserechtheit streng SN ISO 105/E01) mit Mehrfaserband als Begleitgewebe durchgeführt. Die Ergebnisse dieser Prüfungen sind in Tabelle 2 aufgeführt.

**Tabelle 2:**

| Farbstoff | Nachbehandlung | Aendern der Nuance | Bluten auf | | | | | |
|---|---|---|---|---|---|---|---|---|
| | | | CT | CO | PA | PE | PAC | WO |
| (104) | unbehandelt | 4 | 3-4 | 4 | 3 | 3-4 | 3-4 | 3 |
| (104) | Beispiel 3 | 5 | 5 | 5 | 5 | 5 | 5 | 5 |
| (105) | unbehandelt | 4 | 4 | 2 | 3-4 | 4 | 4 | 3 |
| (105) | Beispiel 3 | 5 | 5 | 5 | 5 | 5 | 5 | 5 |

### Beispiel 4:

(A) Eine Kreuzspule von 500 g gebleichtem Baumwollgarn wird mit einer wässrigen Färbeflotte gefärbt, die bei einem Flottenverhältnis von 1:20 1,5 % eines Farbstoffes der Formel 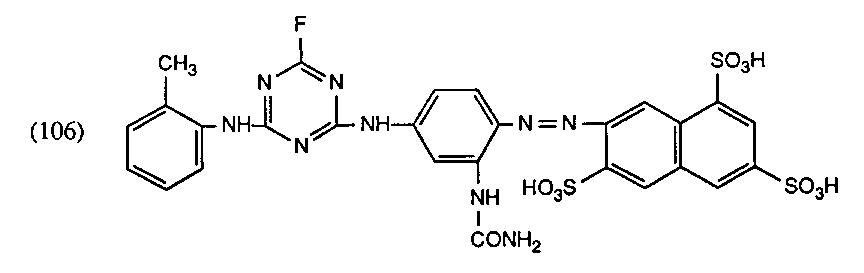
   1,5 % eines Farbstoffes der Formel 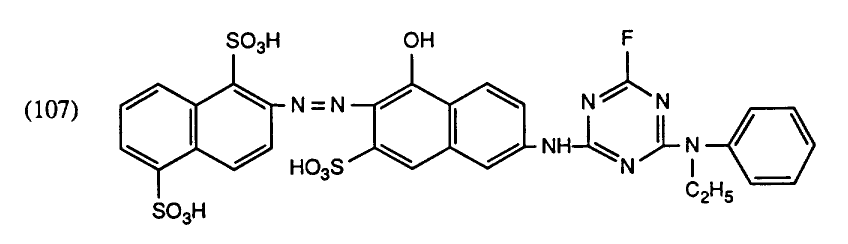
   5 % eines Farbstoffes der Formel 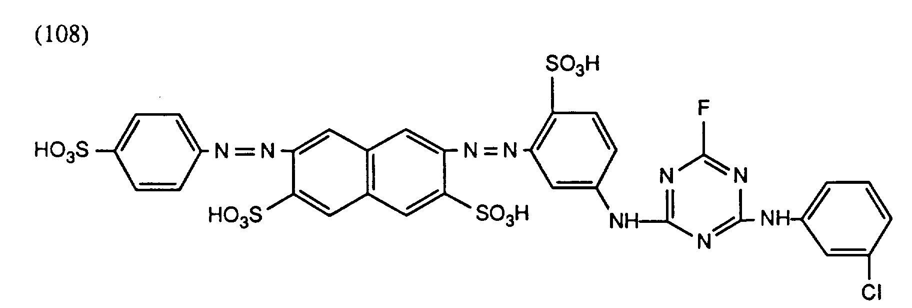 und 80 g/l Natriumsulfat enthält, wobei die Färbung 60 Minuten bei 50°C durchgeführt wird. Alsdann werden dem Färbebad 5 g/l Natriumcarbonat calc. und 1 ml/l 30 % Natriumhydroxidlösung zugesetzt, worauf die Ware weitere 60 Minuten bei 50°C behandelt wird. Die erhaltene Färbung wird anschliessend
   10 Minuten in kaltem Wasser
   10 Minuten in Wasser von 80°C
   10 Minuten kochend geseift und
   10 Minuten in Wasser von 40°C
   gespült.
(B) Die gemäss (A) schwarz gefärbte Baumwolle wird bei 20°C mit einer wässrigen Zubereitung behandelt, die bei einem Flottenverhältnis von 1:20, 1,2 % des Polymerisationsproduktes gemäss Herstellungsbeispiel 2 und 5 g/l Natriumsulfat enthält. Hierauf steigert man die Temperatur in 20 Minuten auf 50°C. Man setzt 4 ml/l 30 % Natriumhydroxidlösung zu und behandelt das Material weitere 30 Minuten bei 50°C. Die Ware wird dann 2 mal 10 Minuten in kaltem Wasser gespült und schliesslich getrocknet. Man erhält eine waschechte schwarze Färbung.
(C) Verwendet man in (A) anstelle der angegebenen Farbstoffmischung 5 % eines Farbstoffes der Formel (104), 0,5 % eines Farbstoffes der Formel 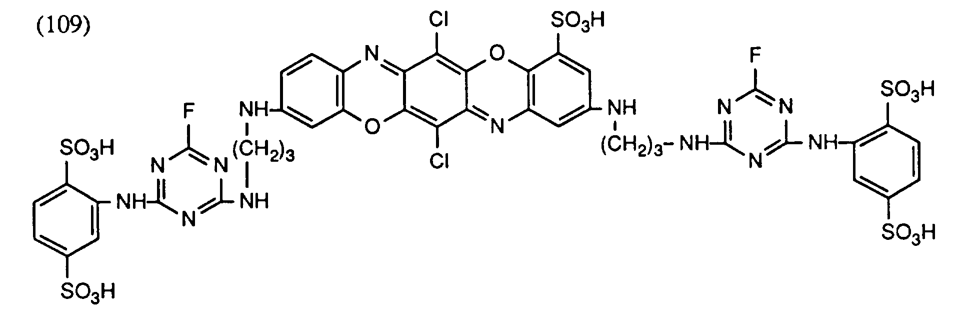 und behandelt die resultierende violette Färbung gemäss (B), so erhält man ebenfalls eine waschechte Reaktivfärbung.

### Beispiel 5:

Eine Faserstoffsuspension aus gebleichtem Birkensulfatzellstoff und Kiefernsulfatzellstoff im Gewichtsverhältnis 1:1 in Wasser von 10°dH (deutsche Härtegrade), die ein Schopper-Riegler Mahlgrad von 35° und einen Feststoffgehalt von 0,5 % aufweist, wird mit 20 % Kreide als Füllmittel versetzt. 10 Sekunden danach gibt man 0,5 % Trockensubstanz eines Leimungsmittels folgender Formel 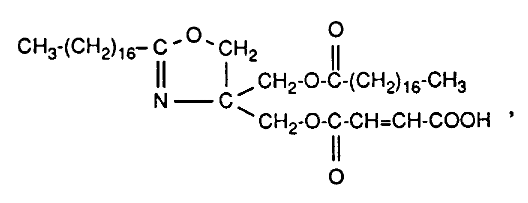 bezogen auf den Feststoffgehalt der Faserstoffsuspension zu. Das Leimungsmittel liegt als weiterverdünnbare, homogene, stabile Formulierung vor. Es wurde in geschmolzener Form mit 89 Mol% Natriumhydroxyd in Gegenwart von Wasser bei 80°C emulgiert.

10 Sekunden nach der Leimungsmittelzugabe gibt man 0,25 % Trockensubstanz des Polymerisationsproduktes gemäss Herstellungsbeispiel 2, das als Retentionsmittel dient, zu. Dann gibt man 0,01 % Percol 292® [kationisches, hochmolekulares (MG>1.10⁷) Polyacrylamid] als Hilfsmittel zum Zurückhalten feinster Zellstoffaserteilchen zu.

Anschliessend wird die Faserstoffsuspension in einem Labor-Blattbildner "Formette Dynamique" der Fa. Allimand, Grenoble, Frankreich, zu Papierblättern verarbeitet, die nach einer ersten Trocknung bei 130°C während 3 Minuten ein Flächengewicht von 80 g/m aufweisen. Das so erhaltene Papierblatt wird einer zusätzlichen Wärmebehandlung bei 140°C während 3 Minuten unterworfen. Beide Oberflächen der erhaltenen Papierblätter, d.h. die auf der Siebseite des Blattbildners erhaltene Oberfläche und die Gegen- oder Oberseite werden auf ihre Leimungseigenschaften geprüft.

Zu diesem Zweck wird die Wasseraufnahme nach Cobb bei 30 Sekunden Einwirkungsdauer (WA Cobb₃₀) gemäss Din 53 132 gemessen.

Die Ergebnisse der WA Cobb₃₀-Messungen in g/m der Siebseite (SS) und Oberseite (OS) sind nachfolgend aufgeführt. Je geringer die Wasseraufnahme desto besser ist die Leimung des Papiers.

| WA Cobb₃₀(g/m) | | | | |
|---|---|---|---|---|
| sofort | | nach 1 Tag Lagerung | | nach 2 Wochen Lagerung |
| SS | OS | SS | OS | SS |
| 21 | 12 | 18 | 10 | 17 |

## Patentansprüche

1. Verfahren zur Nachbehandlung von gefärbtem cellulosehaltigem Fasermaterial, dadurch gekennzeichnet, dass man dieses Material mit einer wässerigen Flotte behandelt, welche das Polymerisat einer quaternären Ammoniumverbindung der Formel 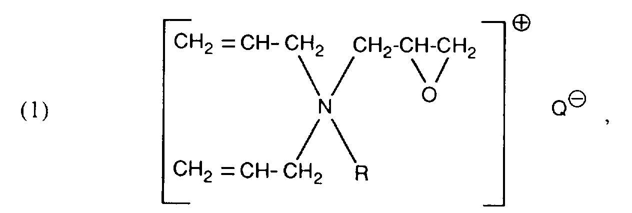 worin R C₁-C₃-Alkyl und Q^{^{⊖}} ein C₁-C₃-Alkylsulfation oder das Anion einer aromatischen Sulfonsäure bedeuten, enthält, wobei das Polymerisat durch Umsetzung von 1-Diallylamino-2,3-epoxypropan mit einem Sulfonsäurealkylester der Formel
(2) Z-SO₂-OR,
worin Z einen Arlyrest oder -OR bedeutet und R die angegebene Bedeutung hat, und Polymerisation der erhaltenen quaternären Ammoniumverbindung der Formel (1) hergestellt wird.

2. Verfahren gemäss Anspruch 1, dadurch gekennzeichnet, dass in Formel (1) R Methyl oder Ethyl bedeutet.

3. Verfahren gemäss einem der Ansprüche 1 und 2, dadurch gekennzeichnet, dass in Formel (1) Q^{⊖} das Methylsulfation oder das Ethylsulfation bedeutet.

4. Verfahren gemäss einem der Ansprüche 1 bis 3, dadurch gekennzeichnet, dass die Nachbehandlung nach dem Ausziehverfahren erfolgt.

5. Verfahren gemäss einem der Ansprüche 1 bis 4, dadurch gekennzeichnet, dass die Nachbehandlung bei einer Temperatur von 20 bis 70°C erfolgt.

6. Verfahren gemäss einem der Ansprüche 1 bis 5, dadurch gekennzeichnet, dass die Nachbehandlung aus alkalischem Medium erfolgt.

7. Verfahren gemäss einem der Ansprüche 1 bis 6, dadurch gekennzeichnet, dass die wässerige Flotte zusätzlich 2 bis 10 ml/l einer 30%-igen wässerigen Natriumhydroxidlösung enthält.

8. Verfahren gemäss einem der Ansprüche 1 bis 7, dadurch gekennzeichnet, dass man mit Reaktivfarbstoffen oder mit substantiven Farbstoffen gefärbtes Cellulosefasermaterial verwendet.

9. Verwendung eines Polymerisats einer quaternären Ammoniumverbindung der Formel 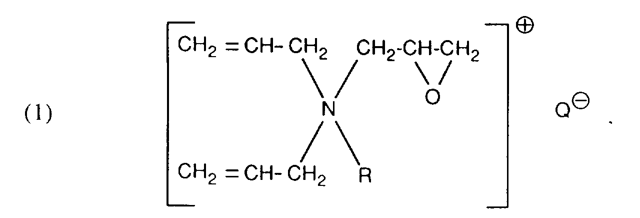 worin R C₁-C₃-Alkyl und Q^{⊖} ein C₁-C₃-Alkylsulfation oder das Anion einer aromatischen Sulfonsäure bedeuten, wobei das Polymerisat durch Umsetzung von 1-Diallylamino-2,3-epoxypropan mit einem Sulfonsäurealkylester der Formel
(2) Z-SO₂-OR,
worin Z einen Arlyrest oder -OR bedeutet und R die angegebene Bedeutung hat, und Polymerisation der erhaltenen quaternären Ammoniumverbindung der Formel (1) hergestellt wird, zur Nachbehandlung von gefärbtem Cellulosefasermaterial.

## Claims

1. A process for the aftertreatment of dyed cellulose-containing fibre material, which comprises treating this material with an aqueous liquor which contains a polymer of a quaternary ammonium compound of the formula 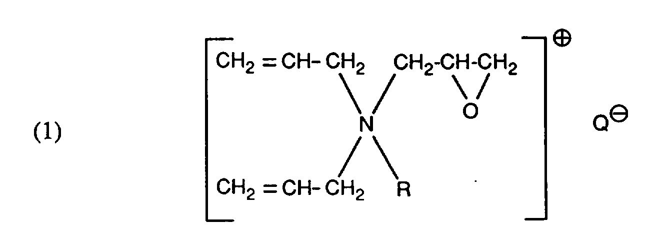 in which R is C₁-C₃alkyl and Q^{⊖} is a C₁-C₃alkylsulfate ion or the anion of an aromatic sulfonic acid, in which the polymer is prepared by reacting 1-diallylamino-2,3-epoxypropane with an alkyl sulfonate of the formula
(2) Z-SO₂-OR
in which Z is an aryl radical or -OR and R is as defined and polymerising of the quaternary ammonium compound obtained of the formula (1).

2. A process according to claim 1, wherein R in formula (1) is methyl or ethyl.

3. A process according to any one of claims 1 and 2, wherein Q^{⊖} in formula (1) is the methylsulfate ion or the ethylsulfate ion.

4. A process according to any one of claims 1 to 3, wherein the aftertreatment takes place after the exhaust process.

5. A process according to any one of claims 1 to 4, wherein the aftertreatment is carried out at a temperature of 20 to 70°C.

6. A process according to any one of claims 1 to 5, wherein the aftertreatment is carried out from an alkaline medium.

7. A process according to any one of claims 1 to 6, wherein the aqueous liquor additionally contains 2 to 10 ml/l of a 30 % aqueous sodium hydroxide solution.

8. A process according to any one of claims 1 to 7, wherein cellulose fibre material dyed with reactive dyes or with direct dyes is used.

9. The use of a polymer of a quaternary ammonium compound of the formula 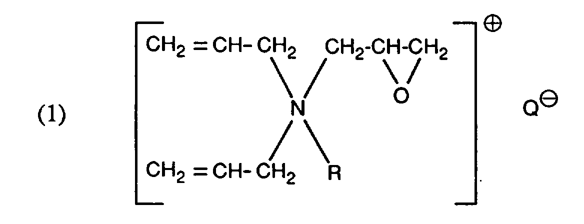 in which R is C₁-C₃alkyl and Q^{⊖} is a C₁-C₃alkylsulfate ion or the anion of an aromatic sulfonic acid, in which the polymer is prepared by reacting 1-diallylamino-2,3-epoxypropane with an alkyl sulfonate of the formula
(2) Z-SO₂-OR
in which Z is an aryl radical or -OR and R is as defined, and polymerising the quaternary ammonium compound obtained of the formula (1), for the aftertreatment of dyed cellulose fibre material.

## Revendications

1. Procédé pour le post-traitement de matériaux fibreux teints contenant de la cellulose, caractérisé en ce que ces matériaux sont traités avec un bain aqueux contenant le produit de polymérisation d'un composé de type ammonium quaternaire de formule 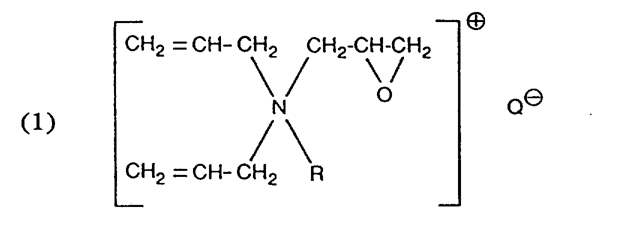 dans laquelle R représente un groupe alkyle en C₁₋₃ et Q⁻ un ion alkylsulfate en C₁₋₃ ou l'anion d'un acide sulfonique aromatique, le produit de polymérisation étant préparé par réaction de 1-diallylamino-2,3-époxy-propane avec un sulfonate d'alkyle de formule
(2) Z-SO₂-OR
où Z représente un résidu aryle ou -OR et R a la signification indiquée, suivie de la polymérisation du composé de type ammonium quaternaire de formule (1) obtenu.

2. Procédé conforme à la revendication 1, caractérisé en ce que dans la formule (1), R représente un groupe méthyle ou éthyle.

3. Procédé conforme à une des revendications 1 et 2, caractérisé en ce que dans la formule (1), Q⁻ représente un ion méthylsulfate ou éthylsulfate.

4. Procédé conforme à une des revendications 1 à 3, caractérisé en ce que le post-traitement se fait selon un procédé par épuisement.

5. Procédé conforme à une des revendications 1 à 4, caractérisé en ce que le post-traitement se fait à une température comprise entre 20 et 70 °C.

6. Procédé conforme à une des revendications 1 à 5, caractérisé en ce que le post-traitement se fait dans un milieu alcalin.

7. Procédé conforme à une des revendications 1 à 6, caractérisé en ce que le bain aqueux contient en plus de 2 à 10 ml/l d'une solution d'hydroxyde de sodium aqueux à 30 %.

8. Procédé conforme à une des revendications 1 à 7, caractérisé en ce que l'on utilise un matériau fibreux cellulosique teint avec des colorants substantifs ou des colorants réactifs.

9. Utilisation d'un produit de polymérisation d'un composé de type ammonium quaternaire de formule 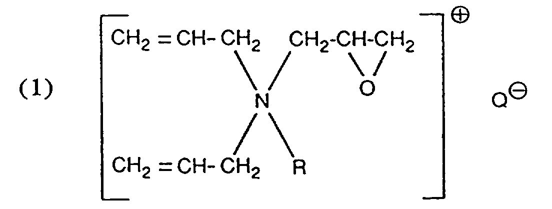 dans laquelle R représente un groupe alkyle en C₁₋₃ et Q⁻ un ion alkylsulfate en C₁₋₃ ou l'anion d'un acide sulfonique aromatique, le produit de polymérisation étant préparé par réaction de 1-diallylamino-2,3-époxy-propane avec un sulfonate d'alkyle de formule
(2) Z-SO₂-OR
où Z représente un résidu aryle ou -OR et R a la signification indiquée, suivie de la polymérisation du composé de type ammonium quaternaire de formule (1), pour le post-traitement de matériaux fibreux cellulosiques teints.
